# EUROPEAN PATENT APPLICATION

(11) **EP 4 819 360 A1**
(43) Date of publication of application: **07.10.2026**
(21) Application number: 24932413.8
(22) Date of filing: 26.07.2024
(51) Int. Cl.: H01M 50/531, H01M 6/00, H01M 10/00

(54) **END COVER ASSEMBLY FOR BATTERY CELL, BATTERY CELL, AND BATTERY**

(30) Priority: 25.03.2024 CN 202410346890
(71) Applicant: Contemporary Amperex Technology Co., Limited, Ningde, Fujian 352100 (CN)
(72) Inventor: PENG, Xinying, Ningde, Fujian 352100 (CN); CHEN, Xinxiang, Ningde, Fujian 352100 (CN); ZHENG, Yulian, Ningde, Fujian 352100 (CN); BAI, Hualei, Ningde, Fujian 352100 (CN); ZHANG, Xiaoping, Ningde, Fujian 352100 (CN); CAO, Mengkai, Ningde, Fujian 352100 (CN)
(74) Representative: Ran, Handong
(86) International application number: PCT/CN2024/107899
(87) International publication number: WO 2025/200205

(57) **Abstract**

Provided are an end cover assembly (23) for a battery cell (20), the battery cell (20), a battery (10), and an electric device, capable of realizing the connection between an end cover (231) and an insulating member (232) at low costs. The end cover assembly (23) comprises: the end cover (231); the insulating member (232) provided on the side of the end cover (231) facing the interior of the battery cell (20) and used for isolating the end cover (231) from an electrode assembly (21) inside the battery cell (20); and a connecting member (233) provided between the end cover (231) and the insulating member (232) to be connected to the end cover (231) and the insulating member (232).

## Description

### CROSS-REFERENCE TO RELATED APPLICATIONS

The present application claims priority to Chinese Patent Application 202410346890.5, entitled "END COVER ASSEMBLY FOR BATTERY CELL, BATTERY CELL, AND BATTERY" filed on March 25, 2024, which is incorporated by reference in the present application.

### TECHNICAL FIELD

The present application relates to the technical field of batteries, and particularly relates to an end cover assembly for a battery cell, the battery cell, and a battery.

### BACKGROUND

Currently, in order to increase the volumetric capacity of battery cells, the thickness of end covers has been reduced, and higher-strength steel materials have been used. The steel materials have poor flowability, while the end covers are thinner, it is difficult to form heat-melt clamping grooves matched with lower plastic on the end covers, resulting in a problem that the end covers and the lower plastic cannot be connected.

### SUMMARY OF THE INVENTION

The embodiments of the present application provide an end cover assembly for a battery cell, the battery cell, and a battery, aiming to realize connection between an end cover and an insulating member at low costs.

In a first aspect, the end cover assembly for the battery cell is provided and includes: an end cover; an insulating member which is arranged on a side of the end cover facing an interior of the battery cell and configured to isolate the end cover from an electrode assembly inside the battery cell; and a connecting member which is arranged between the end cover and the insulating member and configured to connect the end cover with the insulating member.

According to the embodiment of the present application, the connecting member is arranged between the end cover and the insulating member and configured to connect the end cover with the insulating member, thereby achieving the connection between a cover plate and the insulating member when a hot-melt clamping groove cannot be used. Further, compared to forming a clamping groove around each of the end cover and the insulating member, in the embodiment of the present application, the cost for connection between the end cover and the insulating member can be effectively decreased.

In some possible embodiments, the connecting member is of a nail-shaped structure; a head of the nail-shaped structure is connected to a first surface of the insulating member, and a rod part of the nail-shaped structure passes through the insulating member to be connected to the end cover; and the first surface of the insulating member is a surface of the insulating member facing the interior of the battery cell.

According to the above technical solution, the connecting member is of the nail-shaped structure, which can effectively reduce the process difficulty of the connecting member, thereby realizing the connection between the end cover and the insulating member in a simpler mode.

In some possible embodiments, in a direction away from the interior of the battery cell, an end surface of the rod part is flush with the end cover, while an outer surface of the rod part is connected to the end cover.

According to the above technical solution, in a direction away from the interior of the battery cell, the end surface of the rod part of the nail-shaped structure rod part is flush with the end cover, while the outer surface of the rod part is connected to the end cover, thereby implementing easily and being low in process difficulty.

In some possible embodiments, the end cover is provided with a groove facing the interior of the battery cell, and the end surface of the rod part abuts against the groove.

According to the above technical solution, the end cover is provided with the groove facing the interior of the battery cell, and the end surface of the rod part of the nail-shaped structure abuts against the groove, thereby easily realizing the connection between the end cover and the insulating member, and the process difficulty is low.

In some possible embodiments, the material of the connecting member is the same as that of the end cover.

Therefore, if the connecting member is connected to the end cover and the insulating member by welding, the connecting member and the end cover can be better welded, thereby greatly reducing the process difficulty.

In some possible embodiments, the material of the connecting member and the material of the end cover are both steel.

According to the above technical solution, the material of the connecting member and the material of the end cover are both the steel, and the steel is a hard material and has high strength, so that the strength of the end cover can be effectively improved, and the strength of connection between the end cover and the insulating member can be improved.

In some possible embodiments, 2 to 4 connecting members are provided. Therefore, the strength of connection between the end cover and the insulating member can be effectively improved.

In some possible embodiments, in a length direction of the end cover, a connection position between the connecting member and the end cover is in a quarter area of the end cover, and the connection position between the connecting member and the insulating member is in a quarter area of the insulating member; and/or, in the length direction of the end cover, the connection position between the connecting member and the end cover is within a central area of the end cover, and the connection position between the connecting member and the insulating member is within a central area of the insulating member.

According to the above technical solution, in the length direction of the end cover, the connection position between the connecting member and the end cover is within the quarter area and/or the central area of the end cover, and the connection position between connecting member and the insulating member can be within the quarter area and/or the central area of the insulating member, such that enough strength of connection of the insulating member on the end cover can be ensured. In addition, if a plurality of connecting members are provided, the connecting members are reasonably distributed by the abovementioned way, and therefore, the strength of connection of the insulating member on the end cover is further improved.

In some possible embodiments, an insulating layer is arranged on the outer surface of the connecting member.

According to the above technical solution, the insulating layer is arranged on the outer surface of each connecting member, thus the probability of short circuit occurring between the end cover and other components through the connecting member can be reduced.

In some possible embodiments, the insulating layer is arranged at a portion, connected to the insulating member, of the connecting member. Therefore, the probability of short circuit occurring due to the end cover conducting electricity with other components through the connecting member can be reduced at low costs.

In some possible embodiments, an insulation resistance of the insulating layer is greater than 1 Gohm at a voltage of 400-600 V. Therefore, the insulating layer can maintain enough insulation performance, thereby further reducing the probability of short circuit occurring due to the end cover conducting electricity with other components through the connecting member.

In some possible embodiments, a peel strength of the insulating layer is greater than or equal to 0.1 N/mm.

According to the above technical solution, the peel strength of the insulating layer is set to be greater than or equal to 0.1 N/mm, thereby ensuring a connection force between the insulating layer and the connecting member, and relieving the problem that the insulating layer and the connecting member are separated to influence the insulation performance of the connecting member.

In some possible embodiments, under a condition that the insulating layer is connected to a copper foil or aluminum foil, the insulating layer is not layered after being soaked in an electrolyte solution at the temperature of 35-55°C for 4-6 h.

Therefore, the service life of the insulating layer in an electrolyte solution environment is ensured to be long enough, and therefore, the service life of the battery cell is effectively prolonged.

In some possible embodiments, the insulating layer includes an insulating adhesive, a base material of the insulating adhesive includes polyethylene glycol terephthalate, and a backing material of the insulating adhesive includes a pressure-sensitive adhesive.

Since base material and the backing material of the commonly used insulating adhesive are polyethylene glycol terephthalate and the pressure-sensitive adhesive, respectively, and in this technical solution, the base material of the insulating adhesive is polyethylene glycol terephthalate, and the backing material is the pressure-sensitive adhesive, it is not only kept consistent with the commonly used insulating adhesive and remains the process uniformity, but also utilizes the mature process to achieve a high success rate.

In some possible embodiments, the insulating layer is formed by a chemical nickel plating mode.

Since most current products are insulated by the chemical nickel plating mode, and in above technical solution, the insulating layer is formed by the chemical nickel plating mode, it not only remains the process uniformity with most current products but also utilizes the mature process to achieve a high success rate.

In a second aspect, the battery cell is provided and includes: a case having an opening; an electrode assembly accommodated in the case; and the end cover assembly described in the first aspect or any embodiment described in the first aspect; and the end cover assembly covers the opening so as to cover the electrode assembly in the case.

In a third aspect, the battery is provided and includes the battery cell described in the second aspect.

In a fourth aspect, the electrical apparatus is provided and includes the battery described in the third aspect; and the battery is configured to supply electric energy to the electrical apparatus.

In a fifth aspect, an energy storage apparatus is provided and includes the battery described in the third aspect; and the battery is configured to store electric energy for the energy storage apparatus.

### BRIEF DESCRIPTION OF THE DRAWINGS

FIG. 1 is a schematic structural diagram of a vehicle according to an embodiment of the present application.
FIG. 2 is a schematic structural diagram of a battery according to an embodiment of the present application.
FIG. 3 is an exploded schematic diagram of a battery cell according to an embodiment of the present application.
FIG. 4 is a schematic diagram of one end cover assembly according to an embodiment of the present application.
FIG. 5 is an exploded schematic diagram of another end cover assembly according to an embodiment of the present application.
FIG. 6 is a top view of an end cover assembly in FIG. 5.
FIG. 7 is a cross-sectional schematic structural diagram of an end cover assembly along A-A' in FIG. 5.
FIG. 8 is an enlarged view of an end cover assembly at B in FIG. 7.
FIG. 9 is an exploded schematic diagram of yet another further end cover assembly according to an embodiment of the present application.
FIG. 10 is a top view of an end cover assembly in FIG. 9.
FIG. 11 is a cross-sectional schematic structural diagram of an end cover assembly along C-C' in FIG. 9.
FIG. 12 is an enlarged view of an end cover assembly at D in FIG. 11.

### DETAILED DESCRIPTION

For the purpose of making objects, technical schemes and advantages of the present application more clear, clear and complete description will be made to the technical solutions of the present application in cooperation with accompanying drawings in the embodiments of the present application. Definitely, the described embodiments are merely a part of the embodiments of the present application and not all the embodiments. Based on the embodiments in the present application, all other embodiments obtained by ordinary technicians in this field without creative work belong to the protection scope of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. The terms "first," "second," etc. in the specification and the claims of the present application as well as the above drawings are used to distinguish different objects, rather than to describe a specific order or primary-secondary relationship.

The positional terms in the following description correspond to the directions shown in the figure and are not intended to limit the specific structure of the present application. In the description of the present application, it needs to be further noted that, unless otherwise expressly specified and limited, terms "mounted," "connected," and "connection" should be understood in a broad sense, for example, as a fixed connection, as a detachable connection, or as an integral connection; and as a direct connection, as an indirect connection through an intermediate medium. For those of ordinary skills in the art, the specific meanings of the above terms in the present application may be understood according to specific circumstances.

A reference to "embodiment" in the present application means that a particular feature, structure, or characteristic described in conjunction with an embodiment may be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application may be combined with other embodiments.

In the present application, the term "a plurality of" refers to more than two (including two), similarly, "a plurality of groups" refers to two or more groups (including two groups), and "a plurality of pieces" refers to more than two pieces (including two pieces).

In the field of new energy, batteries can serve as the main power source for electrical apparatuses (such as vehicles, ships, or spacecraft). The battery mentioned in the embodiments of the present application refers to a single physical module including one or more battery cells to provide higher voltage and capacity. For example, the batteries mentioned in the present application may include a battery module or a battery pack.

In the embodiment of the present application, the battery cell can be a secondary battery, and the secondary battery refers to a battery cell which can be continuously used by activating an active material in a charging way after being discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the examples of the present application.

The battery cell generally includes an electrode assembly. The electrode assembly includes a positive electrode, a negative electrode, and a spacer. During the charging and discharging of the battery cell, active ions (such as lithium ions) are intercalated and deintercalated back and forth between the positive electrode and the negative electrode. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene, polyethylene glycol terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. The example of the lithium-containing phosphate may include but is not limited to at least one of a group consisting of lithium iron phosphate (such as LiFePO4 (LFP for short)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector.

As an example, the negative electrode current collector may be a metal foil or composite current collector. For example, it is the metal foil, and aluminum or stainless steel subjected to silver surface treatment, stainless steel, copper, aluminum, nickel, carbon electrode, carbon, nickel or titanium and the like may be adopted. The composite current collector may include a polymer material substrate and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene glycol terephthalate, polybutylene terephthalate, polystyrene, polyethylene, etc.).

For example, the negative electrode plate may include a negative electrode current collector and a negative electrode active material provided on at least one surface of the negative electrode current collector.

As an example, the negative electrode current collector has two opposite surfaces in the thickness direction, and the negative electrode active material is arranged on any one of or both the two opposite surfaces of the negative electrode current collector.

As an example, the negative electrode active material may be a negative electrode active material commonly known in the art for use in battery cells. As an example, the negative electrode active material can include at least one of the following materials: artificial graphite, natural graphite, soft carbon, hard carbon, a silicon-based material, a tin-based material, lithium titanate and the like.

In some embodiments, the negative electrode may adopt metal foam. The metal foam can be nickel foam, copper foam, aluminum foam, alloy foam, or foamy carbon, etc. When the metal foam is treated as the negative electrode plate, the negative electrode active material may be not arranged on a surface of the metal foam, and the negative electrode active material may also be arranged.

As an example, a lithium source material, potassium metal or sodium metal may also be filled or/and deposited in the negative electrode current collector, and the lithium source material is lithium metal and/or a lithium-rich material.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. A type of the separator is not particularly limited in the present application, and any well-known separator with a porous structure having good chemical stability and mechanical stability may be selected.

As an example, a main material of the separator may be selected from at least one of glass fiber, non-woven fabric, polyethylene, polypropylene, polyvinylidene fluoride and ceramics.

In some embodiments, the spacer is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The present application has no specific limitation on a type of the electrolyte, which can be selected according to requirements. The electrolyte may be in a liquid state, a gel state, or a solid state.

In some embodiments, the electrode assembly is of a winding structure. The positive electrode plate and the negative electrode plate are wound into the wound structure.

In some implementations, the electrode assembly is of a stacked structure.

As an example, a plurality of positive electrode plates and a plurality of negative electrode plates may be provided, and the plurality of positive electrode plates and the plurality of negative electrode plates may be alternately stacked.

As an example, a plurality of positive electrode plates may be provided, and the negative electrode plate may be folded to form a plurality of stacked folded segments, with one positive electrode plate sandwiched between adjacent folded segments.

As an example, both the positive electrode plates and the negative electrode plates are folded to form a plurality of stacked folded segments.

As an example, a plurality of spacers may be provided and arranged between any adjacent positive electrode plates or negative electrode plates.

As an example, the spacers may be continuously provided between any adjacent positive electrode plates or negative electrode plates in a folding or winding mode.

In some implementations, the shape of the electrode assembly may be a cylinder, a flat shape, a polygon prism, or the like.

In some embodiments, the electrode assembly is provided with a tab, and the tab may lead current out of the electrode assembly. The tab includes a positive electrode tab and a negative electrode tab.

The battery cell can also include an end cover and lower plastic. Generally, the end cover can be heat-fused to form a plurality of clamping grooves. For example, clamping grooves can be formed around an edge area of the end cover, and the lower plastic and the end cover can be connected through the plurality of clamping grooves.

Currently, in order to increase the volumetric capacity of battery cells, the thickness of end covers has been reduced, and higher-strength steel materials have been used for replacing the material of the end cover. The steel materials have poor flowability, while the end covers are thinner, it is difficult to form hot-melt clamping grooves matched with lower plastic on the end covers, resulting in a problem that the end covers and the lower plastic cannot be connected.

In view of above, the embodiment of the present application provides an end cover assembly for a battery cell; a connecting member is arranged between an end cover and an insulating member and configured to connect the end cover with the insulating member, thereby achieving the connection between a cover plate and the insulating member when a hot-melt clamping groove cannot be used. Further, compared to forming the clamping groove around each of the end cover and the insulating member, in the embodiment of the present application, the cost for connection between the end cover and the insulating member can be effectively decreased.

The technical solution described by the embodiments of the present application is suitable for various electric apparatuses using batteries.

The electric apparatus can be vehicles, mobile phones, portable devices, laptops, ships, spacecraft, electric toys, power tools, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

The following embodiment, for the sake of convenience, are illustrated with an example of the electrical device for the vehicle.

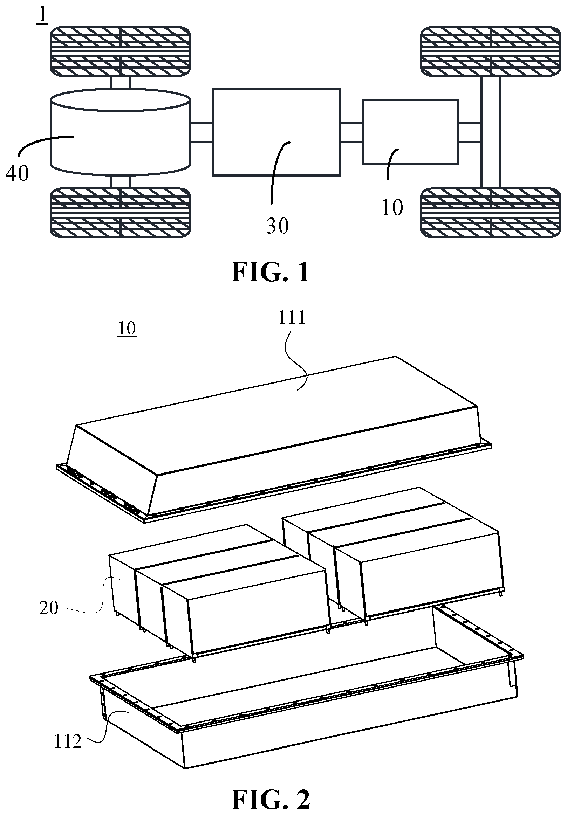

For example, as shown in FIG. 1, it is a schematic structural diagram of a vehicle 1 according to an embodiment of the present application, the vehicle 1 may be a fuel vehicle, a gas vehicle or a new energy vehicle, and the new energy vehicle may be a pure electric vehicle, a hybrid electric vehicle or an extended-range vehicle and the like. A motor 40, a controller 30, and a battery 10 can be arranged in a vehicle 1; and the controller 30 is configured to control the battery 10 to supply power to the motor 40. For example, the battery 10 may be arranged at the bottom or the head or the tail of the vehicle 1. The battery 10 may be configured to supply power to the vehicle 1. For example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve as the operation power source of the vehicle 1 and can also serve as a driving power source of the vehicle 1, and replaces or partially replace fuel oil or natural gas to provide driving power for the vehicle 1.

For example, as shown in FIG. 2, it is a schematic structural diagram of a battery 10 according to an embodiment of the present application. The battery 10 can include a plurality of battery cells 20. Besides the battery cells 20, the battery 10 can also include a box, the interior of the box is of a hollow structure, and the plurality of battery cells 20 can be accommodated in the box. As shown in FIG. 2, the box body can include two parts, namely a first box body part 111 and a second box body part 112 which are snap-fitted together. The shapes of the first box body portion 111 and the second box body portion 112 may be determined according to the combined shape of the plurality of battery cells 20, and at least one of the first box body portion 111 and the second box body portion 112 has an opening. For example, as shown in FIG. 2, only one of the first box body portion 111 and the second box body portion 112 is a hollow rectangular prism with an opening, while the other one may be of a plate shape to cover the opening. Here, taking the second box body portion 112 being a hollow rectangular prism and having only one surface being an open face and the first box body portion 111 being of a plate shape as an example, the opening of the second box body portion 112 is covered by the first box body portion 111 to form the box body 11 having an enclosed cavity that can be used for accommodating the plurality of battery cells 20. The plurality of battery cells 20 are combined in parallel, in series or in a hybrid pattern, and then placed in the box body formed by snap-fitting the first box body portion 111 to the second box body portion 112.

For another example, differing from FIG. 2, the first box body portion 111 and the second box body portion 112 may both be hollow rectangular prisms and each have only one open face. The opening of the first box body portion 111 and the opening of the second box body portion 112 are arranged opposite to each other, and the first box body portion 111 and the second box body portion 112 are snap-fitted with each other to form the box having a sealed chamber. The plurality of battery cells 20 are combined in parallel, in series or in a hybrid pattern, and then placed in the box body formed by snap-fitting the first box body portion 111 to the second box body portion 112.

In some embodiments, the battery 10 can also include other structures, which will not be listed here. For example, the battery 10 can also include a bus part (not shown in the figure); the bus part is configured to achieve electric connection among the plurality of battery cells 20. Specifically, the bus part can achieve the electric connection among the battery cells 20 through electrode terminals that are connected to the battery cells 20. In some embodiments, the bus part can be fixed to the electrode terminals of the battery cells 20 by welding. Electric energy of the plurality of battery cells 20 can be further led out through a conductive mechanism passing through the box body. In some embodiments, the conductive mechanism can also belong to the bus part.

In order to meet different power demands, a plurality of battery cells 20 can be provided, and the plurality of battery cells can be connected in parallel, in series or in a hybrid pattern, and the hybrid pattern refers to a combination of series connection and parallel connection. The battery 10 also can be called a battery pack. In some embodiments, the plurality of battery cells can be connected in parallel, in series or in a hybrid pattern to form battery modules, and a plurality of battery modules are connected in parallel, in series or in a hybrid pattern to form the battery 10. That is, the plurality of battery cells can directly form the battery 10, or the plurality of battery cells can form the battery module, and then the battery modules form the battery 10.

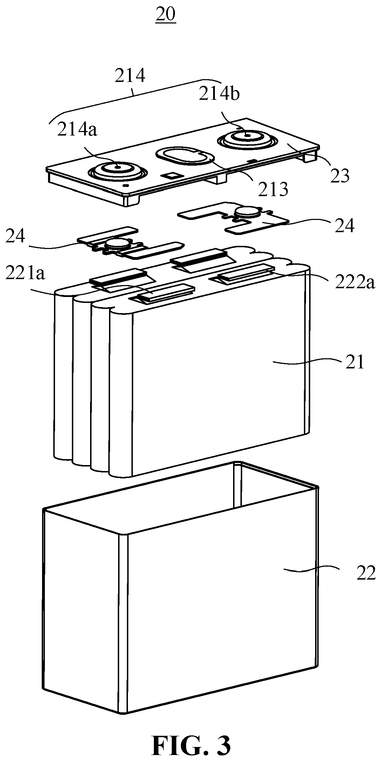

FIG. 3 is an exploded schematic diagram of a battery cell 20 according to an embodiment of the present application.

As shown in FIG. 3, the battery cell 20 includes one or more electrode assemblies 21, a case 22, and an end cover assembly 23, in which, a wall of the case 22 and the end cover assembly 23 are both called the wall of the battery cell 20. The case 22 is determined according to the shape of the one or more electrode assemblies 21 after combination, for example, the case 22 can be a hollowed-out cuboid or cube or cylinder, and one surface of the case 22 is provided with an opening through which the one or more electrode assemblies 21 can be placed in the case 22. For example, if the case 22 is the hollowed-out cuboid or cube, one plane of the case 22 is an opening surface, that is, the plane is not provided with a wall body, so that the inside and the outside of the case 22 are in communication. If the case 22 is the hollowed-out cylinder, an end surface of the case 22 is an opening surface, that is, the end surface is not provided with a wall body, so that the inside and the outside of the case 22 are inn communication. The end cover assembly 23 covers the opening and is connected to the case 22 to form a sealed chamber for placing the electrode assemblies 21. The case 22 is filled with an electrolyte, such as an electrolyte solution.

The battery cell 20 further includes two electrode terminals 214. The end cover assembly 23 is generally in a flat plate shape, the two electrode terminals 214 are fixed to the flat plate surface of the end cover assembly 23, and the two electrode terminals 214 are a positive electrode terminal 214a and a negative electrode terminal 214b, respectively. Each electrode terminal 214 is correspondingly provided with a connecting component 24, or can also be called a current collecting component, which is located between the end cover assembly 23 and the electrode assembly 21 and configured to electrically connect the electrode assembly 21 with the electrode terminal 214.

As shown in the FIG. 3, each electrode assembly 21 is provided with a first electrode tab 221a and a second electrode tab 222a. The first electrode tabs 221a and the second electrode tabs 222a are opposite in polarity. For example, if the first electrode tabs 221a are the positive electrode tabs, the second electrode tabs 222a are the negative electrode tabs. The first electrode tabs 221a of one or more electrode assemblies 21 are connected to one electrode terminal 214 through one connecting component 24, and the second electrode tabs 222a of one or more electrode assemblies 21 are connected to the other electrode terminal 214 through the other connecting component 24. For example, the first electrode tabs 221a are the positive electrode tabs, the second electrode tabs 222a are the negative electrode tabs, the positive electrode terminal 214a is connected to the first electrode tabs 221a through one connecting component 24, and the negative electrode terminal 214b is connected to the second electrode tabs 222a through the other connecting component 24.

In the battery cell 20, according to actual use requirements, one or more electrode assemblies 21 can be arranged, and as shown in FIG. 3, four independent electrode assemblies 21 are arranged in the battery cell 20.

As an example, a pressure relief mechanism 213 can be further arranged on one wall of the battery cell 20. The pressure relief mechanism 213 is actuated when the internal pressure or temperature of the battery cell 20 reaches a threshold so as to relieve the internal pressure or temperature.

Optionally, the pressure relief mechanism 213 can be arranged on the end cover assembly 23, or arranged on any wall of the case 22.

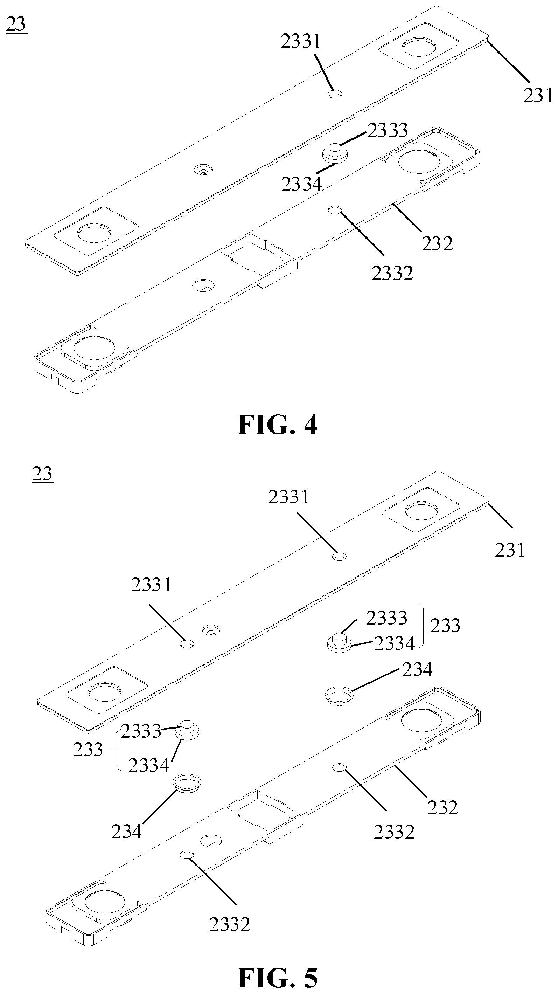

FIG. 4 is a schematic diagram of an end cover assembly 23 according to an embodiment of the present application. As shown in FIG. 4, the end cover assembly 23 can include an end cover 231, an insulating member 232, and a connecting member 233. The insulating member 232 is arranged on one side of the end cover 231 facing the inside of the battery cell and is configured to separate the end cover 231 from the electrode assembly inside the battery cell. The connecting member 233 is arranged between the end cover 231 and the insulating member 232 and is configured to connect the end cover 231 with the insulating member 232.

Optionally, the connecting member 233 can be configured to connect the end cover 231 with the insulating member 232 in ways including, but not limited to a welding way.

Optionally, the insulating member 232 can be a lower plastic.

The battery cell can be a cylindrical battery cell, a prismatic battery cell, a pouch battery cell, or a battery cell in other shapes; the prismatic battery cell includes a square-case battery cell, a blade-shaped battery cell, and a polygon prism shaped battery, such as a hexagonal prism battery.

If the battery cell is the cylindrical battery cell, the end cover 231 can be circular. If the battery cell is the blade-shaped battery cell, the end cover 231 can be polygonal, such as rectangular. If the battery cell is the blade-shaped battery cell, the end cover 231 can be very thin. The battery cell is set to be the blade-shaped battery cell, so that the energy density of the battery cell can be improved within a limited space of the battery.

Besides the end cover 231, the insulating member 232, and the connecting member 233, the end cover assembly 23 can also include a riveting block, a second insulating member, and a sealing ring. The riveting block is configured to fix the electrode terminal that is convexly arranged on the end cover 231. The second insulating member is also called as an upper plastic and is configured to isolate the end cover 231 from the riveting block. The sealing ring is configured to form a seal between the electrode terminal and the end cover 231. The sealing ring can be annular for example, and is sleeved with the electrode terminal.

According to the embodiment of the present application, the connecting member 233 is arranged between the end cover 231 and the insulating member 232 and is configured to connect the end cover 231 with the insulating member 232, thereby achieving the connection between a cover plate and the insulating member 232 when a hot-melt clamping groove cannot be used. Further, compared to forming a clamping groove around each of the end cover 231 and the insulating member 232, in the embodiment of the present application, the cost for connection between the end cover 231 and the insulating member 232 can be effectively decreased.

The material of the end cover 231 can be a metal material, such as aluminum, and steel. The steel can be stainless steel, carbon steel, and the like.

The material of the connecting member 233 can be any material. For example, the material of the connecting member 233 can be steel. Therefore, the strength of connection between the end cover 231 and the insulating member 232 can be improved.

Under the condition that the end cover 231 and the insulating member 232 are connected by the connecting member 233 in a welding manner, in order to carry out welding better, in some embodiments, the material of the connecting member 233 can be the same as that of the end cover 231. Therefore, under the condition that the end cover 231 and the insulating member 232 are connected by the connecting member 233 in the welding manner, the connecting member 233 and the end cover 231 can be welded better, and the process difficulty is greatly reduced.

For example, the material of the connecting member 233 and the material of the end cover 231 can both be the steel. The steel is a hard material and has high strength, such that the strength of the end cover 231 can be effectively improved, and the strength of connection between the end cover 231 and the insulating member 232 is improved.

With reference to FIG. 4, one connecting member 233 can be provided.

Or, a plurality of connecting members 233 can be provided. For example, 2-4 connecting members 233 are provided. As shown in FIG. 5 to FIG. 12, 2 connecting members 233 are provided.

Therefore, the strength of connection between the end cover 231 and the insulating member 232 can be effectively improved.

In the embodiment of the present application, a connection position between the connecting member 233 and the end cover 231 is set corresponding to the connection position on the insulating member 232.

As one example, the connection position 2331 of the connecting member 233 on the end cover 231 can be a random position on the end cover 231, and correspondingly, the connection position 2332 of the connecting member 233 on the insulating member 232 can be a random position on the insulating member 232.

As another example, as shown in FIG. 4 to FIG. 12, in a length direction of the 231 end cover, the connection position 2331 of the connecting member 233 on the end cover 231 can be in a quarter area of the end cover 231, and the connection position 2332 of the connecting member 233 on the insulating member 232 can also be in a quarter area of the insulating member 232.

For example, if 2 connecting members 233 are provided, the connection positions 2332 of the two connecting members 233 on the end cover 231 can be symmetrically set in the quarter region of the end cover 231 in the length direction, and meanwhile, the connection positions of the two connecting members 233 on the insulating member 232 can be symmetrically set in the quarter region of the insulating member 232.

As yet another example, in the length direction of the end cover 231, the connection position 2331 of the connecting member 233 on the end cover 231 is within a central area of the end cover 231, and the connection position 2332 of the connecting member 233 on the insulating member 232 is within a central area of the insulating member 232.

According to the above technical solution, in the length direction of the end cover 231, the connection position 2331 of the connecting member 233 on the end cover 231 is within the quarter area and/or the central area of the end cover 231, and in the length direction of the insulating member 232, the connection position 2332 of connecting member 233 on the insulating member 232 can be within the quarter area and/or the central area of the insulating member, such that enough strength of connection of the insulating member 232 on the end cover 231 can be ensured. In addition, if a plurality of connecting members 233 are provided, the connecting members 233 are reasonably distributed by the abovementioned way, and therefore, the strength of connection of the insulating member 232 on the end cover 231 is further improved.

In some cases, the insulating member 232 can be of a split structure. At the moment, the connecting member 233 can be connected to each insulating member 232. Therefore, each insulating member 232 can be connected to the end cover 231, and the overall strength of connection of the insulating member 232 on the end cover 231 can be improved.

With reference to FIG. 4 to FIG. 12, in some embodiments, the connecting member 233 can be of a nail-shaped structure. For example, the connecting member 233 can be a connecting nail. A head 2333 of the nail-shaped structure can be connected to a first surface of the insulating member 232, and a rod part 2334 of the nail-shaped structure can pass through the insulating member 232 to be connected to the end cover 231. The first surface of the insulating member 232 is a surface of the insulating member 232 facing the interior of the battery cell.

That is, the connecting member 233 can pass through the insulating member 232 in a boss buckling mode so as to be connected to the end cover 231.

The production processes of different manufacturers may be different, in order to make the end cover assembly 23 in the embodiment of the present application suitable for different scenarios, two ways for connection of the connecting member 233 on the end cover 231 are provided in the embodiment of the present application.

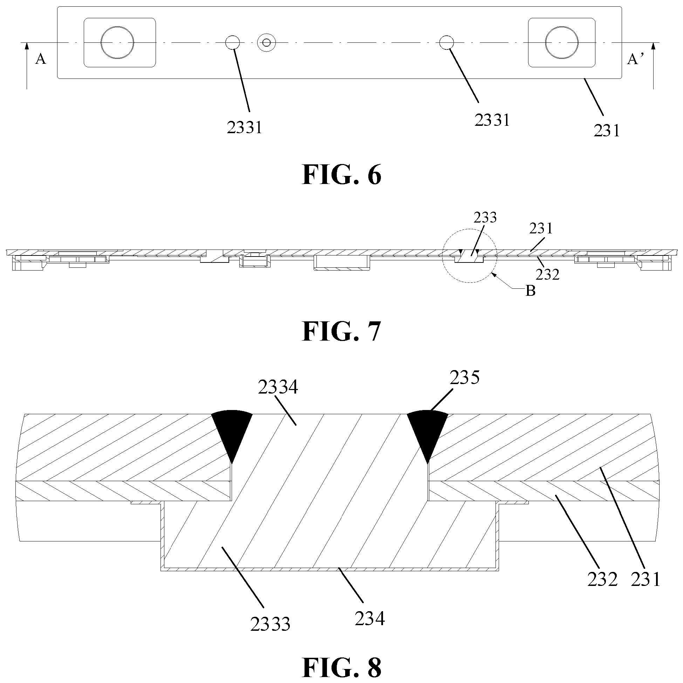

In one embodiment, as shown in FIG. 5 to FIG. 8, in a direction away from the interior of the battery cell, an end surface of the rod part 2334 of the nail-shaped structure is flush with the end cover 231, while an outer surface of the rod part 2334 is connected to the end cover 231. FIG. 6 is a top view of FIG. 5, FIG. 7 is a sectional view along A-A' in FIG. 5 along the A, and FIG. 8 is an enlarged view of B in FIG. 7.

The end surface is the surface of the connecting member 233 away from the interior of the battery cell.

In this embodiment, the connection position 2331 of the connecting member 233 on the end cover 231 is on the surface of the end cover 231.

Optionally, the structures shown in FIG. 5 to FIG. 8 can be obtained in a surface welding mode. For example, the welding can be performed around the rod part 2334 of the nail-shaped structure so that the nail-shaped structure can be connected to the end cover 231. 235 in FIG. 8 is a welding mark.

According to the above technical solution, in a direction away from the interior of the battery cell, the end surface of the rod part 2334 of the nail-shaped structure rod part is flush with the end cover 231, while the outer surface of the rod part 2334 is connected to the end cover 231, thereby implementing easily and being low in process difficulty.

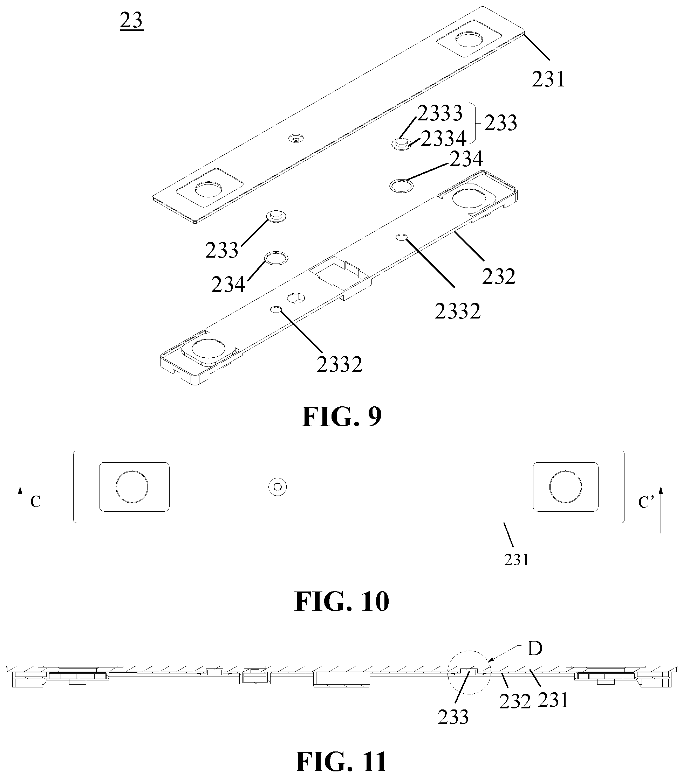

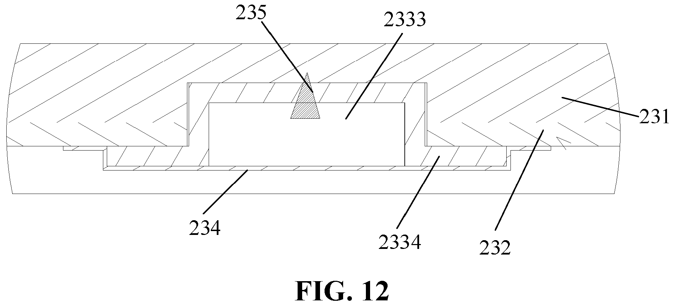

In another embodiment, as shown in FIG. 9 to FIG. 12, the end cover 231 is provided with a groove facing the interior of the battery cell, and the end surface of the rod part 2334 of the nail-shaped structure abuts against the groove. FIG. 10 is a top view of FIG. 9, FIG. 11 is a sectional view along C-C' in FIG. 9, and FIG. 12 is an enlarged view of D in FIG. 11.

That is, the rod part 2334 of the nail-shaped structure can be accommodated in the groove.

As shown in FIG. 12, in the direction away from the interior of the battery cell, the rod part 2334 of the nail-shaped structure is smaller than the end cover 231.

In this embodiment, the connection position 2331 of the connecting member 233 on the end cover 231 is within the end cover 231.

Optionally, the structures shown in FIG. 9 to FIG. 12 can be obtained in a penetration welding mode. 235 in FIG. 12 is a welding mark.

According to the technical solution, the end cover 231 is provided with the groove facing the interior of the battery cell, and the end surface of the rod part 2334 of the nail-shaped structure abuts against the groove, thereby easily realizing the connection between the end cover 231 and the insulating member 232, and the process difficulty is low.

In order to reduce the probability of short circuit occurring due to the end cover 231 conducting electricity with other components through the connecting member 233, further, the connecting member 233 can be insulated.

As one example, the connecting member 233 can be made of an insulating material.

As another example, as shown in FIG. 2 to FIG. 12, the outer surface of the connecting member 233 can be provided with an insulating layer 234.

The whole outer surface of the connecting member 233 can be provided with the insulating layer 234.

Or, the insulating layer 234 is arranged at a portion, connected to the insulating member 232, of the connecting member 233. Therefore, the probability of short circuit occurring due to the end cover 231 conducting electricity with other components through the connecting member 233 can be reduced at low costs.

Optionally, the insulating layer 234 can be an insulating adhesive, an insulating film, and the like. Or, the insulating layer 234 can be formed in an electroplating manner.

In order to ensure that the insulating layer 234 has sufficient insulating performance and to further reduce the probability of short circuit occurring due to the end cover 231 conducting electricity with other components through the connecting member 233, in some embodiments, the insulation resistance of the insulating layer 234 can be greater than 1 Gohm at the voltage of 400-600 V.

For example, the insulation resistance of the insulating layer 234 is 2 Gohm at the voltage of 500 V. Or, the insulation resistance of the insulating layer 234 is 3 Gohm at the voltage of 550 V.

In order to ensure the connection force between the insulating layer 234 and the connecting member 233, in some embodiments, the peel strength of the insulating layer 234 can be greater than or equal to 0.1 N/mm.

For example, the peel strength of the insulating layer 234 can be 0.2 N/mm, 0.3 N/mm, 0.5 N/mm, 1 N/mm, 2 N/mm, and the like.

Therefore, the connection force between the insulating layer 234 and the connecting member 233 can be ensured, and the probability that the insulating layer 234 and the connecting member 233 are separated to influence the insulating performance of the connecting member 233 is reduced.

In order to ensure that the service life of the insulating layer 234 in an electrolyte solution environment is long enough and to further prolong the service life of the battery cell, in some embodiments, under a condition that the insulating layer 234 is connected to a copper foil or aluminum foil, the insulating layer 234 is not layered after being soaked in an electrolyte solution at the temperature of 35-55°C for 4-6 h.

For example, under a condition that the insulating layer 234 is adhered to the copper foil or aluminum foil, the insulating layer 234 needs to be soaked in the electrolyte solution at the temperature of 40°C for 4.5 h without being layered. For another example, the insulating layer 234 needs to be soaked in the electrolyte solution at the temperature of 45°C for 5 h without being layered.

In some embodiments, if the insulating layer 234 includes the insulating adhesive, the base material of the insulating adhesive can include, but not limited to, polyethylene glycol terephthalate (PET), and the backing material of the insulating adhesive can include, but not limited to, a pressure-sensitive adhesive.

Since base material and the backing material of the commonly used insulating adhesive are PET and the pressure-sensitive adhesive, respectively, and in this technical solution, the base material of the insulating adhesive is PET, and the backing material is the pressure-sensitive adhesive, it is not only kept consistent with the commonly used insulating adhesive and remains the process uniformity, but also utilizes the mature process to achieve a high success rate.

As described above, the insulating layer 234 can be obtained by an electroplating method. In some embodiments, under the condition that the connecting member 233 is insulated by the electroplating method, the insulating layer 234 can be formed by an electronickelling mode.

Or, the insulating layer 234 can be formed by a chemical nickel plating mode.

Since most current products are insulated by the chemical nickel plating mode, and in above technical solution, the insulating layer is formed by the chemical nickel plating mode, it not only remains the process uniformity with most current products but also utilizes the mature process to achieve a high success rate.

The embodiment of the present application further provides a battery cell. The battery cell can include a case, an electrode assembly, and an end cover assembly. The case is provided with an opening, the electrode assembly is accommodated in the case, and the end cover assembly covers the opening so as to cover the electrode assembly within the case.

Optionally, the end cover assembly can be the end cover assembly 23 described above.

The embodiment of the present application further provides a battery, and the battery can include the battery cell in each of the abovementioned embodiments. In some embodiments, the battery can further include other structures such as a box body, and a bus component, which will not be listed here.

An embodiment of the present application further provides an electrical apparatus, the electrical apparatus may include the battery in the above embodiment, and the battery is used for providing electric energy to the electrical apparatus.

In some embodiments, the electrical apparatus can be a vehicle 1, a ship or a spacecraft in FIG. 1.

The present application further provides an energy storage apparatus which includes the battery in above embodiments, and the battery is configured to store electric energy for the electrical apparatus.

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. An end cover assembly for a battery cell, comprising:
an end cover;
an insulating member which is arranged on a side of the end cover facing an interior of the battery cell and configured to isolate the end cover from an electrode assembly inside the battery cell; and
a connecting member which is arranged between the end cover and the insulating member and configured to connect the end cover with the insulating member.

2. The end cover assembly according to claim 1, wherein the connecting member is of a nail-shaped structure; a head of the nail-shaped structure is connected to a first surface of the insulating member, and a rod part of the nail-shaped structure passes through the insulating member to be connected to the end cover; and the first surface of the insulating member is a surface of the insulating member facing the interior of the battery cell.

3. The end cover assembly according to claim 2, wherein in a direction away from the interior of the battery cell, an end surface of the rod part is flush with the end cover, while an outer surface of the rod part is connected to the end cover.

4. The end cover assembly according to claim 2, wherein the end cover is provided with a groove facing the interior of the battery cell, and the end surface of the rod part abuts against the groove.

5. The end cover assembly according to any one of claims 1 to 4, wherein the material of the connecting member is the same as that of the end cover.

6. The end cover assembly according to claim 5, wherein the material of the connecting member and the material of the end cover are both steel.

7. The end cover assembly according to any one of claims 1 to 6, wherein 2 to 4 connecting members are provided.

8. The end cover assembly according to any one of claims 1 to 7, wherein in a length direction of the end cover, a connection position between the connecting member and the end cover is in a quarter area of the end cover, and the connection position between the connecting member and the insulating member is in a quarter area of the insulating member; and/or,
in the length direction of the end cover, the connection position between the connecting member and the end cover is within a central area of the end cover, and the connection position between the connecting member and the insulating member is within a central area of the insulating member.

9. The end cover assembly according to any one of claims 1 to 8, wherein an insulating layer is arranged on the outer surface of the connecting member.

10. The end cover assembly according to claim 9, wherein the insulating layer is arranged at a portion, connected to the insulating member, of the connecting member.

11. The end cover assembly according to claim 9 or 10, wherein an insulation resistance of the insulating layer is greater than 1 Gohm at a voltage of 400-600 V.

12. The end cover assembly according to any one of claims 9 to 11, wherein a peel strength of the insulating layer is greater than or equal to 0.1 N/mm.

13. The end cover assembly according to any one of claims 9 to 12, wherein under a condition that the insulating layer is connected to a copper foil or aluminum foil, the insulating layer is not layered after being soaked in an electrolyte solution at a temperature of 35-55°C for 4-6 h.

14. The end cover assembly according to any one of claims 9 to 13, wherein the insulating layer comprises an insulating adhesive, a base material of the insulating adhesive comprises polyethylene terephthalate, and a backing material of the insulating adhesive comprises a pressure-sensitive adhesive.

15. The end cover assembly according to any one of claims 9 to 13, wherein the insulating layer is formed by a chemical nickel plating mode.

16. A battery cell, comprising:
a case having an opening;
an electrode assembly accommodated in the case; and
the end cover assembly according to any one of claims 1 to 15, the end cover assembly covering the opening so as to cover the electrode assembly in the case.

17. A battery, comprising the battery cell according to claim 16.
